Europäisches Patentamt

**European Patent Office**

**Office européen des brevets**

(19)

(11) Publication number: **0 054 339**
**A2**

(12) # EUROPEAN PATENT APPLICATION

(21) Application number: **81201381.1**

(22) Date of filing: **15.12.81**

(51) Int. Cl.³: **F 03 B 17/06**

(30) Priority: **17.12.80 NL 8006849**

(43) Date of publication of application:
**23.06.82 Bulletin 82/25**

(84) Designated Contracting States:
**AT BE CH DE FR GB IT LI LU NL SE**

(71) Applicant: **B.V. KONINKLIJKE MAATSCHAPPIJ "DE SCHELDE"**
**Glacisstraat 165 P.O. Box 16**
**NL-4381 SE Vlissingen(NL)**

(72) Inventor: **van der Hoeven, Hendrik Adriaan**
**de Bellink 10**
**NL-4374 EH Zoutelande(NL)**

(74) Representative: **van der Beek, George Frans et al,**
**Nederlandsch Octrooibureau Johan de Wittlaan 15 P.O. Box 29720**
**NL-2502 LS Den Haag(NL)**

(54) **Hydrodynamic machine for high flow capacity.**

(57) A hydrodynamic machine for high flow capacity circumstances and to be used either as a power generating turbine or a pump includes a cage comprising two bearing houses (2, 3) and a number of blades (1) at their ends rotatably supported in these houses and arranged according to an imaginary cylinder. Between the main shaft of the machine and each of the blades transmissions (15, 19, 21; 23, 24, 26) are mounted maintaining the blades in a selected parallel orientation. To each of the blades a blade adjustment motor (7) is added and control means control these motors so that when the cage is revolving, the blades are swinging with respect to said selected orientation.

fig-2

EP 0 054 339 A2

Hydrodynamic machine for high flow capacity.

The invention relates to a hydrodynamic machine for high flow capacity comprising a number of blades arranged according to an imaginary cylinder and at both ends rotatably supported in bearing houses, which in their turn are supported so that they may rotate about the axis of said imaginary cylinder, at least one of the bearing houses being provided with a mechanism to rotate the blades when the bearing houses are revolving, and between the main shaft of the machine and each of the blades a transmission is mounted, said transmissions being able to influence the position of the blades.

Such a hydrodynamic machine is disclosed in European patent application 0 008 590.

Turbines as well as pumps have in common that the power thereof is directly related to the product of the heigt of fall or pressure head, respectively, and the flow capacity. For a certain power, the height of fall or pressure head respectively, will be small if the flow capacity is high. The usual hydrodynamic machines destined for a high flow capacity have a rotor of the screw or propeller type, which is accommodated in a flow channel having a circular cross section. Such a rotor is often directly coupled to a generator or a motor mounted in an extension of the flow channel, i.e. in the water. The latter may be avoided by providing a bent conduit leading round the generator or the motor for diverting the water flow. Such a diversion necessitates much room for the construction and causes an increase of the flow resistance. By using the machine mentioned in the preamble these disadvantages are avoided, because an expensive circular channel is not necessary. A passage way of rectangular cross section is sufficient and the apparatus coupled to the rotating cage can be kept outside the water flow without the application of bends.

In the machine according to the above-mentioned European patent application the transmissions have such dimensions, that for each complete revolution of the cage consisting of bearing houses and blades, the blades will rotate around their own axis over an angle of $180^{o}$. The lines perpendicular to the blades intersect each other in a fixed point lying on the circular path of revolution of the blade shafts. The disadvantage of this known machine is that the angular velocity is substantially determined by the flowing velocity, that is to say that when the flowing velocity is varying, the revolutions per minute of the machine will vary. Because for each revolution of the machine, the blades will rotate over $180^{o}$, the front side of each blade must be equal to the rear side. This means that the blades cannot have a so-called airofoil section (round front side, sharp rear side) which is not favourable for the efficiency. Finally it is a disadvantage that by reversing the flowing direction, also the direction of rotation of the machine will necessarily reverse.

It is the object of the invention to avoid these disadvantages and to provide a hydrodynamic machine as mentioned in the preamble which may have a constant r.p.m. at varying flowing velocity and which may rotate in the same direction when the flowing direction is reversed.

Therefore according to the invention the hydrodynamic machine is characterized in that the transmissions may keep the blades in a selected mutually parallel orientation, that a separate blade adjustment motor is added to each of the blades and that the machine comprises control means to control the adjustment motors so that the blades may carry out a swinging movement with respect to said selected orientation.

Each blade has its own adjustment motor and as a consequence a constant speed of revolution can be obtained when the flowing speed varies. If the flow direction is reversed the blades can be rotated over $180^{o}$ so that the machine is able to rotate always in the same direction. In connection with the selected parallel orientation of the blades and the swinging movement superposed on that orientation, it is possible to make use of blades having an airofoil section.

German patent application 1,941,652 discloses a propelling mechanism for a ship comprising two normal screw propellors for usual speeds and a propellor for small speeds including a number of blades and a mechanism to orient the blades in the sailing direction to decrease the friction. This publication does not deal with a hydrodynamic machine for high flow capacity. The selected orientation only plays a part in the decreasing of the friction or in the steering of the ship (rudder function) and not in the propelling of the ship.

The adjustment motors may be hydraulic motors supplied by at least one hydraulic pump mounted on a bearing house, between each hydrualic motor and the hydraulic pump a control valve being mounted controlled by control means. One single hydraulic pump could be applied for all hydraulic motors or a separate pump is added to one or more hydraulic motors.

Instead of hydraulic blade adjustment motors also electromotors may be applied. Further it is possible that the blade adjustment motors each comprise a hydraulic piston-cylinder assembly. In this case the swinging movement can be generated by a crank mechanism or by a rack secured to the piston rod, and a pinion.

The transmission maintaining the blades in a selected orientation or direction, is preferably formed by a central gear wheel journalled on the main shaft said gear wheel being maintained in a selected position, a gear wheel mounted on each blade shaft and intermediate gear wheels mounted between the central gear wheel and the blade gear wheels.

The transmission could be provided with an endless chain engaging a central sprocket wheel mounted on the main shaft and maintained in a selected position, and a sprocket wheel mounted on each blade shaft.

To be able to vary the orientation, the position of the central gear wheel and sprocket wheel respectively, will be adjustable.

The machine according to the invention will be elucidated now with the aid of the drawings in which two embodiments are shown.

Fig. 1 shows a front view of a bearing house of a hydrodynamic machine according to the invention.

Fig. 2 shows a longitudinal section of the machine according to fig. 1.

Fig. 3 shows a front view to be compared with fig. 1, however, of an alternative embodiment.

Fig. 4 shows a detail of an alternative of a blade adjustment motor.

Fig. 5 shows a detail of an other alternative of a blade adjustment motor.

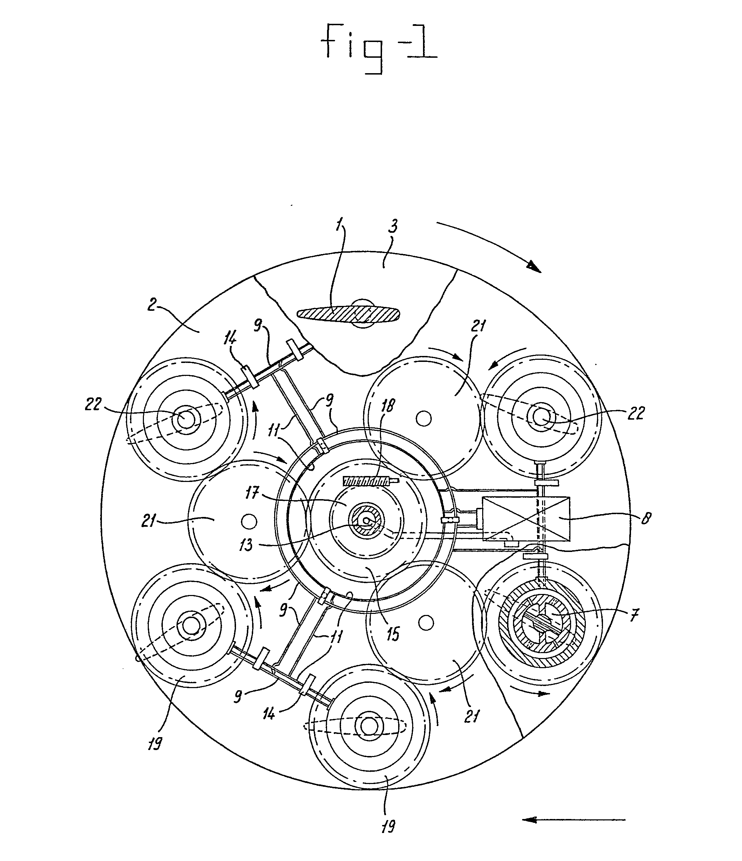

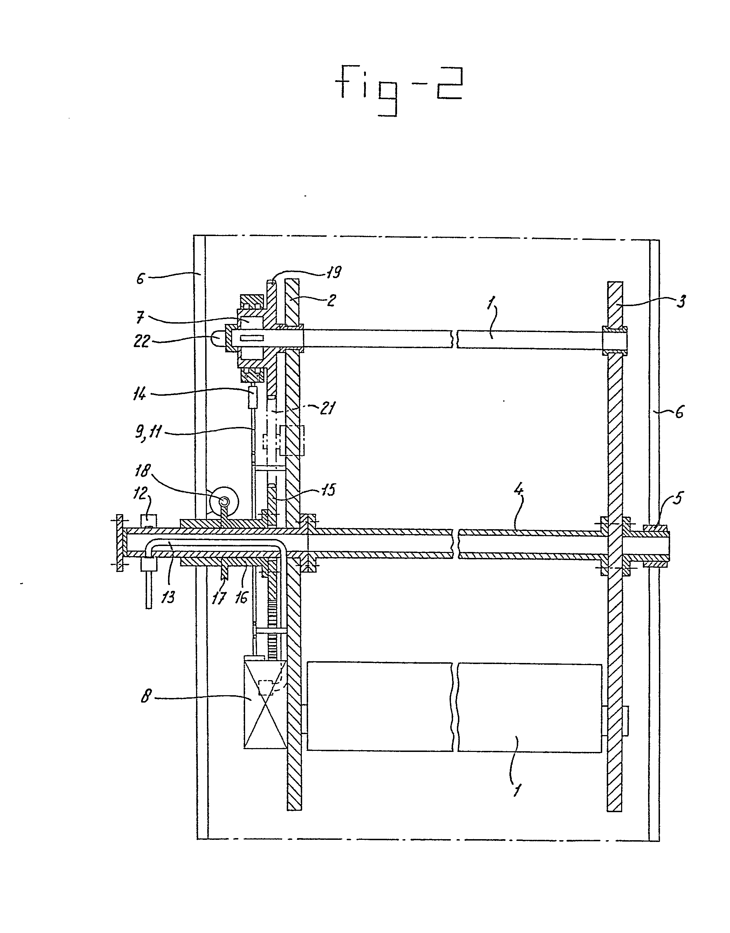

The hydrodynamic machine shown in fig. 1 and 2 may have the function of turbine, or pump or propelling device. In the first case the machine is driven by a water flow indicated in fig. 1 by an arrow, while in the second case the driven pump moves the water in the direction of the arrow.

The machine includes a plurality of blades 1 arranged according to an imaginary cylinder and having its both ends journalled in disc shaped bearing houses 2, 3 mounted on a main shaft 4. This main shaft is supported in the frame 6 of the machine by bearings 5.

A hydraulic motor 7 is added to each of the blades 1 and said motor is able to generate an angular displacement of a blade. The hydraulic motors 7 are supplied by a hydraulic pump 8 mounted on the house 2 through a system of supply lines 9. The hydraulic liquid can return to the pump via a system of return lines 11. The pump 8 is driven by an electro motor mounted in the pump house and receiving electrical current by a line 13 connected with a collector ring 12. The supply and discharge of hydraulic liquid to and from each motor 7 is determined by a control valve 15 which is controlled by a central control mechanism e.g. a microprocessor.

A central gear wheel 15 is mounted on the main shaft 4, said gear wheel being connected with a sleeve 16 also mounted on the main shaft and provided with a toothed flange 17, into which a worm 18 engages. This worm prevents the central gear wheel 15 from rotating together with the main shaft 4, however a modification of the general orientation of the blades remains possible.

The house of each hydraulic motor 7 is provided or connected with a gear wheel 19. Intermediate gear wheels 21 are mounted between the central gear wheel 15 and the gear wheel 19. These intermediate wheels are also mounted on the house 2.

Since the central gear wheel 15 is maintained in a selected position by the worm 18 and the gear wheels 19 are connected through the intermediate gear wheels 21 with the central gear wheel 15, also the gear wheels 19 will have a fixed orientation when the cage, consisting of shaft 4, houses 2, 3 and blades 1, rotates. This means that in case the hydraulic motors 7 do not operate, the blades 1 will have a fixed orientation and direction.

During operation the blade adjustment motors 7 generate a swinging movement of the blades with respect to said fixed orientation, so that the perpendiculars on the blades from corresponding points of the blades, intersect each other in a selected area. In fig. 1 this area is indicated by P. The preference position of this are depends on the flowing direction of the water (vide the arrow) of the desired amplitude of the swinging movement.

It will be clear that the opening movement and closing movement of the valves 14 should depend on the angular position of the bearing house with respect to a certain radius line. The angular position must be determined and transmitted to the central control mechanism.

For determining at any moment the angular position of the subtense of the blades, each hydraulic motor comprises a position recorder 22. Alternative a hydraulic servomechanism is added to each blade, said mechanism having a mechanical back coupling for the position of the blade. This position is determined by a hydraulic pressure controlling the servomechanism. This pressure is adjusted through a control valve actuated by the central control mechanism.

The combination of blades oriented in a certain direction (as a consequence of the transmission of the gear wheels 15, 19, 21) and the swinging movement superposed on that direction (as a conseqence of the hydraulic motors 7) leads to a situation in which the adjustment movement of the blades is only required over a limited angle. It will be clear from fig. 1, that the shown position of the blades fits to the flowing direction of the water rotating the machine or the water moved by the driven machine. This direction is indicated by the arrow.

The embodiment according to fig. 3 differs from that according to fig. 1 and 2 in that in stead of a gear wheel transmission, use is made of an endless chain 23 running on a central sprocket wheel 24, sprocket wheels 25 mounted according to the blade axis and intermediate sprocket wheels 26. Also in this embodiment the central sprocket wheel is adjustable to be able to adjust the so-called steering point (P).

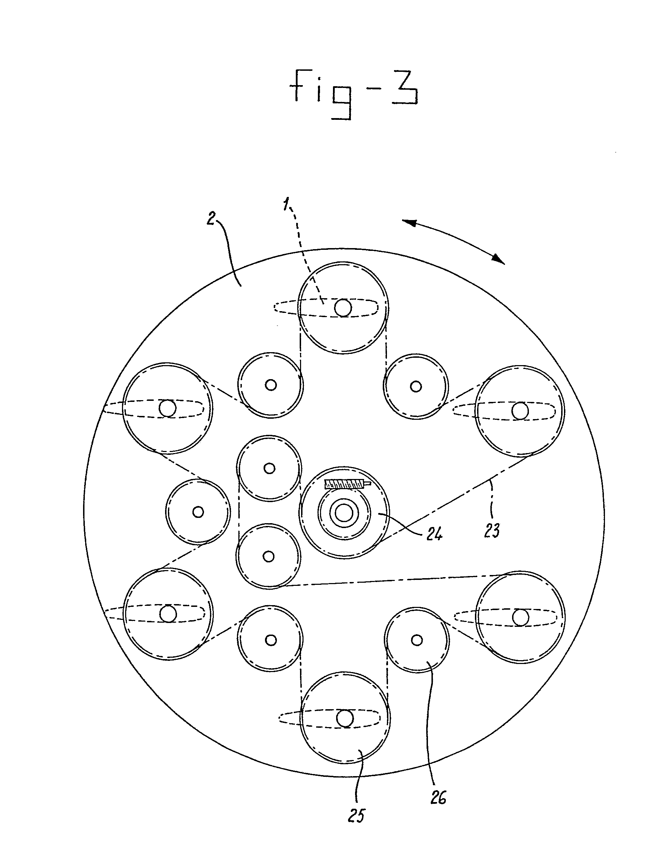

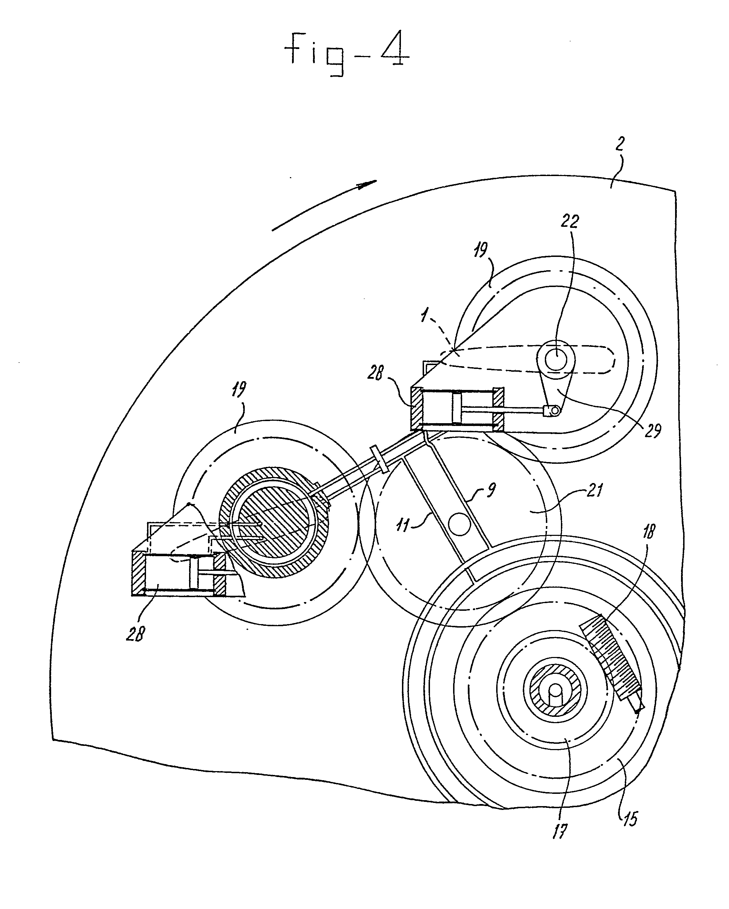

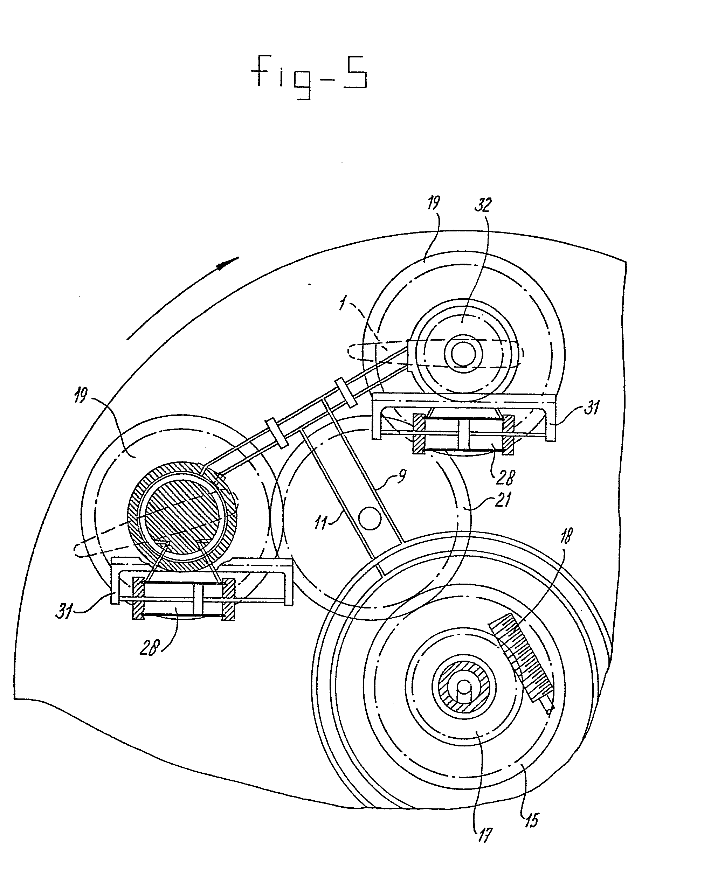

Within the scope of protection of the claims various alternatives of the disclosed construction are possible. For instance instead of a common hydraulic pump, a separate hydraulic pump could be added to each hydraulic motor 7. Instead of a hydraulic adjustment system a completely electrical system is possible and an electromotor being added to each of the blades. As appears from fig. 4 and 5, the hydraulic motors could consist of a crank 29 or rack 31 connected with a piston-cylinder assembly 28 and cooperating with gear wheel 32, the assemblies being supplied by the hydraulic liquid as indicated in fig. 1.

It is essential for the invention that the swinging movement of the blades is not derived from the rotation of the main shaft through a system of hinge levers or such like, however that a separate blade adjustment motor is added to each blade, said motor generating the swinging movement. Further it is essential that the swinging movement is superposed on the blades oriented in a certain position, so that it is avoided that the swinging movement along portions of the circular path is so great, that the necessary couples and angular rotations would cause technical problems.

C L A I M S

1. Hydrodynamic machine for high flow capacity, comprising a plurality of blades arranged according to an imaginary cylinder said blades being rotatably supported at both ends in bearing houses which in their turn are supported so that they may rotate about the axis of said imaginary cylinder, at least one of the bearing houses being provided with a mechanism to cause a rotational movemebt of the blades about their own axis when the bearing houses are revolving, and a transmission being mounted between the main shaft of the machine and each of the blades, said transmissions being able to influence the position of the blades, characterized in, that the transmissions (15,19.21;23,24, 25,26) may maintain the blades in selected mutually parallel orientation, that a separate blade adjustment motor (7) is added to each of the blades (1) and that control means are present to control the blade adjustment motors so that the blades carry out a certain swinging movement with respect to said selected orientation.

2. Hydrodynamic machine according to claim 1, characterized in, that the blade adjustment motors consist of hydraulic motors (7) supplied by at least one hydraulic pump (8) mounted on a bearing house between each hydraulic motor and the hydraulic pump a control valve 14 being mounted controlled by said control means.

3. Hydrodynamic machine according to claim 1, characterized in, that the blade adjustment motors consist of electromotors.

4. Hydrodynamic machine according to claim 1, characterized in, that the blade adjustment motors each consist of a hydraulic piston-cylinder assembly coupled to a crank mechanism or a rack and pinion.

5. Hydrodynamic machine according to one of the preceding claims, characterized in, that the transmission between the main shaft (4) of the machine and the blades (1) consist of a central gear wheel (15) mounted on the main shaft and maintained in a selected position, a gear wheel (19) on each blade shaft, and intermediate gear wheels (21) between the central gear wheel and the blade gear wheels.

6. Hydrodynamic machine according to one of the claims 1-4, characterized in, that the transmission between the main shaft (4) of the machine and the blades (1) comprises an endless chain (23) engaging a central sprocket wheel (24) mounted on the main shaft and maintained in a selected position, and a sprocket wheel (25) mounted on each blade shaft.

7. Hydrodynamic machine according to one of the claims 5 and 6, characterized in, that the position of the central gear wheel respectively sprocket wheel (15 respectively 24) is adjustable.

----------

0054339

# Fig-1

0054339

# Fig-2

# fig-3

Fig-4

Fig-5